# EUROPÄISCHE PATENTSCHRIFT

(11) **EP 3 905 845 B1**
(45) Veröffentlichungstag und Bekanntmachung des Hinweises auf die Patenterteilung: **18.02.2026**
(21) Anmeldenummer: 21164440.6
(22) Anmeldetag: 24.03.2021
(51) Int. Cl.: H05B 3/00, H05B 3/08, F01N 3/20

(54) **ANSCHLUSSEINHEIT ZUM ANSCHLIESSEN EINER ELEKTRISCHEN VERSORGUNGSLEITUNG AN EIN ANSCHLUSSELEMENT EINER BEHEIZBAREN ABGASANLAGE**
CONNECTION UNIT FOR CONNECTING AN ELECTRICAL SUPPLY LINE TO A CONNECTING ELEMENT OF A HEATABLE EXHAUST SYSTEM
UNITÉ DE CONNEXION PERMETTANT DE CONNECTER UNE LIGNE D'ALIMENTATION ÉLECTRIQUE À UN ÉLÉMENT DE CONNEXION D'UNE INSTALLATION DE GAZ D'ÉCHAPPEMENT POUVANT ÊTRE CHAUFFÉE

(30) Priorität: 30.04.2020 DE 102020111777
(43) Veröffentlichungstag der Anmeldung: 03.11.2021
(73) Patentinhaber: Purem GmbH, 66539 Neunkirchen (DE)
(72) Erfinder: Neumann, Felix, 73773 Aichwald (DE); Hänisch, Jan, 73765 Neuhausen a. d. Fildern (DE); Schneider, Christian, 70180 Stuttgart (DE); Guérin, Véronique, 70188 Stuttgart (DE); Grupp, Johannes, 73072 Donzdorf (DE)
(74) Vertreter: Ruttensperger Lachnit Trossin Gomoll

(56) Entgegenhaltungen:
- EP-A1- 0 739 152
- EP-A1- 3 299 599
- EP-B1- 0 739 152
- JP-A- 2017 101 642

## Beschreibung

Die vorliegende Erfindung betrifft eine Anschlusseinheit zum lösbaren Anschließen einer elektrischen Versorgungsleitung an ein Anschlusselement einer beheizbaren Abgasanlage.

Um eine in einer Abgasanlage einer Brennkraftmaschine eines Fahrzeugs angeordnete Abgasbehandlungseinheit, wie zum Beispiel Partikelfilter, Katalysator, insbesondere Oxidationskatalysator oder SCR-Katalysator, insbesondere in einer Startphase des Verbrennungsbetriebs einer Brennkraftmaschine schnell auf eine für die durchzuführende Abgasbehandlung geeignete Temperatur zu bringen, ist es bekannt, derartigen Abgasbehandlungseinheiten elektrisch betriebene Heizeinrichtungen zuzuordnen. Diese können beispielsweise in Form eines stromaufwärts bezüglich einer derartigen Abgasbehandlungseinheit angeordneten Abgasheizers mit einem Heizleiter ausgebildet sein, durch welchen das auf die Abgasnachbehandlungseinheit zu strömende Abgas erwärmt wird und die in diesem aufgenommene Wärme auf die stromabwärts dann folgende Abgasbehandlungseinheit übertragen wird.

Um derartige Heizeinrichtungen an eine Quelle elektrischer Energie, im Allgemeinen eine in einem Fahrzeug vorgesehene Batterie bzw. ein Bordspannungssystem, anschließen zu können, sind an einer eine derartige Heizeinrichtung aufnehmenden Abgasführungskomponente Anschlusselemente vorgesehen, an welche elektrische Versorgungsleitungen angeschlossen werden können. Das Anschließen derartiger Versorgungsleitungen an die zugeordneten Anschlusselemente erfolgt an der grundsätzlich nach außen zur Umgebung hin frei liegenden Außenseite der eine derartige Heizeinrichtung aufnehmenden Abgasführungskomponente, so dass der Bereich, in welchem diese Verbindung hergestellt ist, Umgebungseinflüssen ausgesetzt ist.

Aus der EP 0 739 152 A1 ist eine Anschlusseinheit mit einem Anschlusseinheitgehäuse bekannt, welches mit dem Anschlusselement-Aufnahmebereich und dem Versorgungsleitung-Aufnahmebereich eine im Wesentlichen rechtwinklige Struktur bildet, ein ebenfalls mit im Wesentlichen rechtwinkliger Struktur ausgebildetes Anschlusselement. In seinem im Wesentlichen in dem Versorgungsleitung-Aufnahmebereich sich erstreckenden Abschnitt ist das Anschlusselement an eine im zweiten axialen Versorgungsleitung-Aufnahmebereich-Endbereich in den Versorgungsleitung-Aufnahmebereich sich hinein erstreckende Versorgungsleitung angeschlossen. Mit seinem im Wesentlichen im Anschlusselement-Aufnahmebereich sich erstreckenden Abschnitt steht das Anschlusselement aus dem Anschlusselement-Aufnahmebereich im Bereich von dessen zweitem axialen Anschlusselement-Aufnahmebereich-Endbereich aus dem Anschlusseinheitgehäuse hervor und erstreckt sich durch eine Öffnung in einem Metallgehäuse eines Katalysators hindurch, um einen in dem Metallgehäuse angeordneten elektrischen Heizer zu kontaktieren.

Aus der EP 3 229 599 A1 ist eine Anschlusseinheit gemäß dem Oberbegriff des Anspruch 1 bekannt, bei welcher ein erstes Gehäuseteil an einer Außenumfangsseite einer Abgasführungskomponente einer Abgasanlage durch Verschweißung in einem Bereich festgelegt ist, in welchem ein an einer Abgasführungskomponente vorgesehenes Anschlusselement nach außen hervorsteht. Ein mit elektrisch isolierendem Material aufgebautes, kappenartiges zweites Gehäuseteil der Anschlusseinheit ist durch Verschraubung an dem ersten Gehäuseteil festgelegt und deckt somit das Anschlusselement und eine an dem Anschlusselement durch Verschraubung elektrisch leitend festgelegte Versorgungsleitung ab.

Aus der JP 2017 101642 A ist eine Anschlusseinheit bekannt, bei welcher ein mit mehreren Teilen aufgebautes Anschlusseinheitsgehäuse an einem nach radial außen hervorstehenden und eine Kontaktöffnung in einer Abgasführungskomponente umgebenden Randbereich festgelegt und dadurch an der Abgasführungskomponente getragen ist.

Es ist die Aufgabe der vorliegenden Erfindung, eine Anschlusseinheit zum lösbaren Anschließen einer elektrischen Versorgungsleitung an ein Anschlusselement einer beheizbaren Abgasanlage vorzusehen, mit welcher bei baulich einfacher Ausgestaltung eine zuverlässige Abschirmung des Bereichs, in welchem eine elektrische Verbindung zwischen einer Versorgungsleitung und einem Anschlusselement hergestellt wird, gewährleistet ist.

Erfindungsgemäß wird diese Aufgabe gelöst durch eine Anschlusseinheit zum lösbaren Anschließen einer elektrischen Versorgungsleitung an ein Anschlusselement einer beheizbaren Abgasanlage gemäß Anspruch 1, umfassend ein Anschlusseinheitgehäuse mit einem in Richtung einer ersten Gehäuseachse sich erstreckenden Anschlusselement-Aufnahmebereich und einem in Richtung einer zweiten Gehäuseachse sich erstreckenden Versorgungsleitung-Aufnahmebereich, wobei der Anschlusselement-Aufnahmebereich in einem ersten axialen Anschlusselement-Aufnahmebereich-Endbereich zur Aufnahme eines an einer Abgasanlage hervorstehenden Anschlusselements offen ist und in einem zweiten axialen Anschlusselement-Aufnahmebereich-Endbereich abgeschlossen ist, wobei der Versorgungsleitung-Aufnahmebereich in einem ersten axialen Versorgungsleitung-Aufnahmebereich-Endbereich zu dem Anschlusselement-Aufnahmebereich offen ist und in einem zweiten Versorgungsleitung-Aufnahmebereich-Endbereich zur Aufnahme einer elektrischen Versorgungsleitung offen ist.

Um Zugriff auf denjenigen Bereich zu ermöglichen, in welchem die elektrische Verbindung zwischen einem Anschlusselement und einer zugeordneten Versorgungsleitung hergestellt wird, ist der Anschlusselement-Aufnahmebereich am zweiten axialen Anschlusselement-Aufnahmebereich-Endbereich durch einen Deckel abgeschlossen.

Um zwischen dem Anschlusseinheitgehäuse und dem Anschlusselement sowohl eine elektrische, also eine thermische Isolierung vorzusehen, ist im Anschlusselement-Aufnahmebereich ein das Anschlusseinheitgehäuse bezüglich eines in dem Anschlusselement-Aufnahmebereich aufzunehmenden Anschlusselements abstützendes erstes Isolierelement angeordnet.

Durch das Anschlusseinheitgehäuse, welches die beiden miteinander elektrisch zu verbindenden Komponenten, also das Anschlusselement und die Versorgungsleitung, umkapselt, ist der Bereich, in welchem die elektrisch leitende Verbindung hergestellt wird, nach außen gegen Umgebungseinflüsse abgeschirmt, so dass insbesondere auch die Gefahr eines durch Spritzwasser oder dergleichen erzeugten Kurzschlusses vermieden ist.

Bei einer auch mit vergleichsweise komplexer Formgebung des Anschlusseinheitgehäuses einfach zu realisierenden Ausgestaltung wird vorgeschlagen, dass das Anschlusseinheitgehäuse mit zwei in einem Verbindungsrandbereich miteinander verbundenen Gehäuseschalen aufgebaut ist, wobei jede Gehäuseschale einen ersten Gehäuseschalenabschnitt zum Bereitstellen des Anschlusselement-Aufnahmebereichs und einen zweiten Gehäuseschalenabschnitt zum Bereitstellen des Versorgungsleitung-Aufnahmebereichs aufweist.

Aus Gründen der mechanischen Festigkeit und der Wärmebeständigkeit kann das Anschlusseinheitgehäuse wenigstens teilweise aus Blechmaterial aufgebaut sein.

Um im Angrenzungsbereich an den Außenumfang einer Abgasanlage eine zuverlässige Abschirmungswirkung zu erreichen, wird vorgeschlagen, dass das Anschlusseinheitgehäuse im ersten axialen Anschlusselement-Aufnahmebereich-Endbereich einen bezüglich der ersten Gehäuseachse nach radial außen hervorstehenden Abgasanlage-Anschlussrand mit einer die erste Gehäuseachse ringartig umgebenden, einer Gegen-Anschlussfläche einer Abgasanlage zugewandt zu positionierenden Abgasanlage-Anschlussfläche aufweist.

Dabei kann für eine baulich einfache Ausgestaltung des Anschlusseinheitgehäuses die Abgasanlage-Anschlussfläche in einer zur ersten Gehäuseachse orthogonalen Ebene liegen.

Insbesondere dann, wenn eine Abgasführungskomponente, an welcher ein elektrisch anzuschließendes Anschlusselement nach außen hervorsteht, rohrartig ausgebildet ist und somit eine gekrümmte Außenumfangsfläche aufweist, ist es zur Erlangung einer guten Abschirmwirkung vorteilhaft, wenn die Abgasanlage-Anschlussfläche gekrümmt ist, vorzugsweise um eine zur ersten Gehäuseachse orthogonale Krümmungsachse. Diese Krümmungsachse kann beispielsweise einer Längsmittenachse der rohrartigen Abgasführungskomponente entsprechen.

Vorzugsweise ist der Deckel durch Formschluss am Anschlusseinheitgehäuse gehalten, so dass dieser zum Herstellen bzw. Lösen der Verbindung in einfacher Weise wiederholt vom Anschlusseinheitgehäuse entfernt bzw. daran angebracht werden kann.

Da im Allgemeinen das Isolierelement und das Anschlusseinheitgehäuse aus unterschiedlichen Materialien aufgebaut sind, wird vorgeschlagen, dass das erste Isolierelement an dem Anschlusseinheitgehäuse durch Formschluss gehalten ist.

Zur Herstellung eine Abstützwechselwirkung bezüglich des Anschlusselements kann das erste Isolierelement eine Anschlusselement-Aufnahmeöffnung aufweisen.

Wenn das erste Isolierelement mit Keramikmaterial aufgebaut ist, stellt dieses sowohl eine hervorragende elektrische Isolierung, also eine hervorragende thermische Isolierung bereit. Auch andere Materialien, wie beispielsweise Glimmer-Material, können zum Aufbau eines derartigen Isolierelements eingesetzt werden.

Um auch zwischen dem Anschlusseinheitgehäuse und der Versorgungsleitung eine elektrische und thermische Isolation einzuführen, wird vorgeschlagen dass in dem Versorgungsleitung-Aufnahmebereich ein das Anschlusseinheitgehäuse bezüglich einer in dem Versorgungsleitung-Aufnahmebereich aufzunehmenden Versorgungsleitung abstützendes zweites Isolierelement angeordnet ist.

Auch hier ist es für den Einsatz unterschiedlicher Materialien vorteilhaft, wenn das zweite Isolierelement an dem Anschlusseinheitgehäuse durch Formschluss gehalten ist. Das zweite Isolierelement kann zur Abstützung bezüglich des Anschlusselements eine Versorgungsleitung-Aufnahmeöffnung aufweisen. Auch das zweite Isolierelement kann mit Keramikmaterial oder einem ähnlichen Material, wie zum Beispiel Glimmer-Material, aufgebaut sein.

Für einen kompakten Aufbau der Anschlusseinheit wird vorgeschlagen, dass die zweite Gehäuseachse im Wesentlichen orthogonal zur ersten Gehäuseachse ist.

Die vorliegende Erfindung betrifft ferner eine Abgasanlage für eine Brennkraftmaschine, umfassend eine Abgasführungskomponente, wenigstens ein an der Abgasführungskomponente getragenes Anschlusselement zum Anschluss einer elektrischen Versorgungsleitung und in Zuordnung zu dem wenigstens einen Anschlusselement eine erfindungsgemäß aufgebaute Anschlusseinheit zum Anschließen der dem wenigstens einen Anschlusselement zugeordneten elektrischen Versorgungsleitung an dieses Abschlusselement.

Um den elektrischen Kontakt zwischen dem Anschlusselement und der Versorgungsleitung im Inneren des Anschlusseinheitgehäuse realisieren zu können, kann das wenigstens eine Anschlusselement in dem Anschlusselement-Aufnahmebereich der diesem Anschlusselement zugeordneten Anschlusseinheit aufgenommen sein, und die dem wenigstens einen Anschlusselement zugeordnete Versorgungsleitung kann in dem Versorgungsleitung-Aufnahmebereich der diesem Anschlusselement zugeordneten Anschlusseinheit derart aufgenommen sein, dass ein Anschlussende dieser Versorgungsleitung sich in den Anschlusselement-Aufnahmebereich erstreckt und mit dem Anschlusselement elektrisch leitend verbunden ist. Der elektrische Kontakt wird somit im Wesentlichen im Anschlusselement-Aufnahmebereich hergestellt.

Für eine einfach zu realisierende, gleichwohl stabile elektrische Verbindung kann am Anschlussende der Versorgungsleitung eine auf das Anschlusselement aufgeschobene und daran durch Verschraubung festgelegte Anschlussöse vorgesehen sein.

Für eine stabile Halterung der Anschlusseinheit an der Abgasanlage wird vorgeschlagen, dass die Anschlusseinheit durch das erste Isolierelement bezüglich der Abgasanlage, vorzugsweise bezüglich des Anschlusselements, abgestützt ist. Insbesondere kann dabei vorgesehen sein, dass das erste Isolierelement vermittels eines die Versorgungsleitung am Anschlusselement festlegenden Schrauborgans an der Abgasanlage gehalten ist.

Die Abgasanlage-Anschlussfläche kann einer die Gegen-Anschlussfläche bereitstellenden gekrümmten Außenumfangsfläche der Abgasführungskomponente gegenüberliegen und somit an die gekrümmte Außenumfangsfläche der Abgasführung Komponente angepasst sein.

Bei einer alternativen Ausgestaltung kann vorgesehen sein, dass die Abgasanlage-Anschlussfläche der ungekrümmten Gegen-Anschlussfläche am Anschlusselement oder an der Abgasführungskomponente gegenüberliegt.

Die vorliegende Erfindung wird nachfolgend mit Bezug auf die beiliegenden Figuren detailliert beschrieben. Es zeigt:
- Fig. 1: eine Schnittansicht einer Abgasanlage mit einer Anschlusseinheit zum Anschließen einer Versorgungsleitung an ein Anschlusselement der Abgasanlage;
- Fig. 2: eine der Fig. 1 entsprechende Darstellung einer alternativen Ausgestaltungsart;

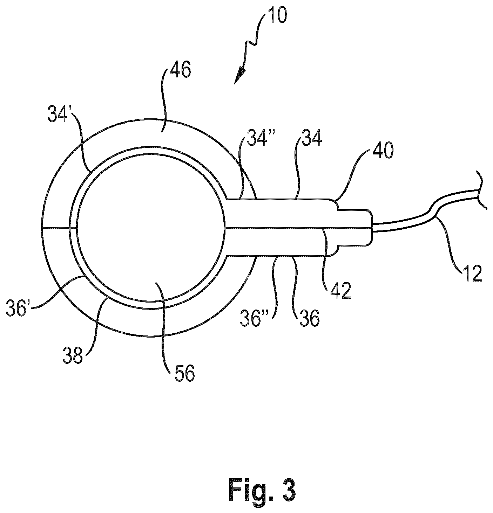

- Fig. 3: eine Draufsicht auf die Anschlusseinheit der Fig. 1 in Blickrichtung III in Fig. 1.

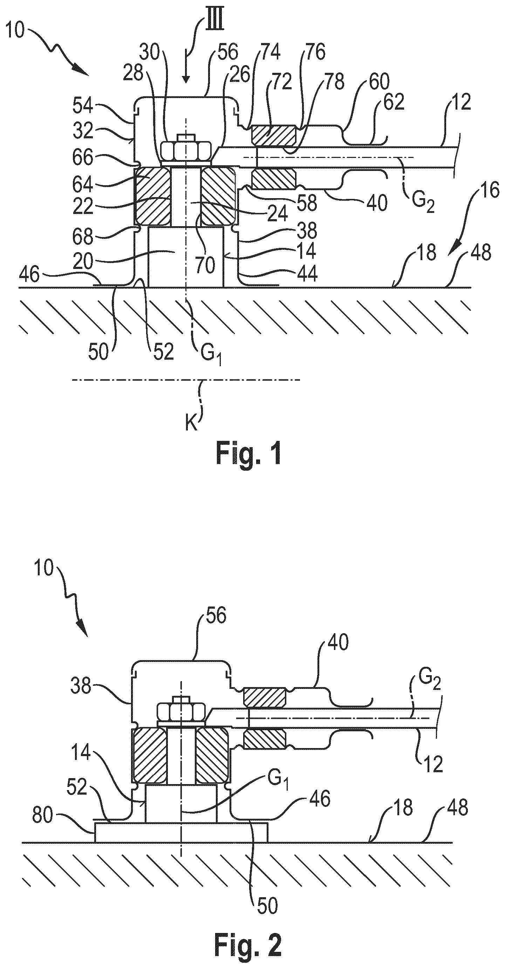

Die Fig. 1 zeigt eine erste Ausgestaltungsart einer allgemein mit 10 bezeichneten Anschlusseinheit, mit welcher eine elektrische Versorgungsleitung 12 mit einem Anschlusselement 14 einer allgemein mit 16 bezeichneten Abgasanlage verbunden werden kann. Die Abgasanlage 16 kann eine rohrartig ausgebildete Abgasführungskomponente 18 umfassen, in welcher Abgas auf eine Abgasbehandlungseinheit, beispielsweise eine Partikelfilter, einen Oxidationskatalysator oder einen SCR-Katalysator, zu strömt. **In** der Abgasführungskomponente 18 kann zum Erwärmen des auf die Abgasbehandlungseinheit zu strömenden Abgases bzw. der Abgasbehandlungseinheit eine elektrisch betriebene Heizeinrichtung angeordnet sein. Diese kann einen Heizleiter umfassen, welcher bei Anlegen einer elektrischen Spannung erwärmt wird und somit Wärme an seine Umgebung abgibt. Die beiden Anschlussenden des Heizleiters sind jeweils an ein an der Abgasführungskomponente 18 getragenes Anschlusselement 14 elektrisch angeschlossen. Jedes derartige Anschlusselement 14 kann beispielsweise ein an der Abgasführungskomponente 18 beispielsweise durch Verschweißen gasdicht festgelegtes Mantelelement 20 und ein darin elektrisch isoliert gehaltenes Leiterelement 22 umfassen, dessen nach außen über die Abgasführungskomponente 18 bzw. das Mantelelement 20 hervorstehendes Ende 24 mit der Versorgungsleitung 12 elektrisch zu verbinden ist.

Dazu weist die Versorgungsleitung 12 an einem Anschlussende 26 eine Anschlussöse 28 auf, welche über das mit Außengewinde versehene Ende 24 des Leiterelements 22 geschoben und in nachfolgend beschriebener Art und Weise daran durch ein Schrauborgan 30, im dargestellten Ausgestaltungsbeispiel eine Mutter, am Anschlusselement 14 zur Herstellung der elektrischen Verbindung festgelegt ist.

Die Anschlusseinheit 10 umfasst ein Anschlusseinheitgehäuse 32, das im dargestellten Ausgestaltungsbeispiel mit zwei jeweils als Blechumformteile aufgebauten Gehäuseschalen 34, 36 ausgebildet ist. Die beiden zueinander komplementär bzw. im Wesentlichen spiegelsymmetrisch aufgebauten Gehäuseschalen 34, 36 stellen zusammen einen in Richtung einer ersten Gehäuseachse G₁ sich erstreckenden Anschlusselement-Aufnahmebereich 38 und einen entlang einer zweiten Gehäuseachse G₂ sich erstreckenden Versorgungsleitung-Aufnahmebereich 40 bereit. Dazu weist jede der beiden Gehäuseschalen 34, 36 einen ersten Gehäuseschalenabschnitt 34', 36' zum Bereitstellen des Anschlusselement-Aufnahmebereichs 38 sowie einen zweiten Gehäuseschalenabschnitt 34", 36" zum Bereitstellen des Versorgungsleitung-Aufnahmebereichs 40 auf. Der Anschlusselement-Aufnahmebereich 38 und der Versorgungsleitung-Aufnahmebereich 40 bzw. deren jeweilige durch die Gehäuseachsen G₁, G₂ bereitgestellte Längsachsen sind vorzugsweise im Wesentlichen orthogonal zueinander angeordnet, so dass grundsätzlich das Anschlusseinheitgehäuse 32 eine näherungsweise rechtwinklige Gestalt aufweist.

Die beiden als Blechumformteile bereitgestellten Gehäuseschalen 34, 36 können in einem Verbindungsrandbereich 42, in welchem diese aneinander angrenzen, beispielsweise durch Umbördeln oder/und durch Materialschluss, also beispielsweise durch Verschweißung, miteinander fest verbunden sein.

An einem ersten axialen Anschlusselement-Aufnahmebereich-Endbereich 44 ist das Anschlusseinheitgehäuse 32 bzw. der Anschlusselement-Aufnahmebereich 38 axial offen zur Aufnahme des Anschlusselements 14 darin. In diesem ersten axialen Anschlusselement-Aufnahmebereich-Endbereich 44 ist am Anschlusseinheitgehäuse 32 ein bezüglich der ersten Gehäuseachse G₂ nach radial außen vorstehender Abgasanlage-Anschlussrand 46 mit einer einer Außenumfangsfläche 48 der Abgasführungskomponente 18 bzw. der Abgasanlage 16 zugewandten Abgasanlage-Anschlussfläche 50 vorgesehen. Bei rohrartiger, also im Wesentlichen kreisrunder Ausgestaltung der Abgasführungskomponente 18 ist vorzugsweise der Anschlussrand 46 bzw. die daran vorgesehene Abgasanlage-Anschlussfläche, welche grundsätzlich die erste Gehäuseachse G₁ ringartig umgibt, um eine Krümmungsachse K gekrümmt ausgebildet, wobei diese Krümmungsachse K im Wesentlichen der Längsmittenachse der Abgasführungskomponente 18 entsprechen kann und somit auch die Krümmungsachse der im Bereich des Anschlusseinheitgehäuses 32 eine Gegen-Anschlussfläche 52 bereitstellenden Außenumfangsfläche der Abgasführungskomponente 18 bereitstellt. Somit wird ein enger Anschluss des Anschlussrands 46 an die Abgasführungskomponente 18 erreicht, wenn das Anschlusseinheitgehäuse 32 an der Abgasanlage 16 festgelegt ist, wobei in diesem Zustand der Anschlussrand 46 beispielsweise die Abgasführungskomponente 18 berühren kann oder einen geringen, spaltartigen Zwischenraum zu dieser belassen kann.

An einem zweiten axialen Anschlusselement-Aufnahmebereich-Endbereich 54 ist der Anschlusselement-Aufnahmebereich 38 durch einen beispielsweise ebenfalls aus Blechmaterial aufgebauten Deckel 56 abgeschlossen. Der Deckel 56 kann an dem Anschlusseinheitgehäuse 32 beispielsweise durch Formschluss, insbesondere durch Verrastung festgelegt sein, so dass er zum wiederholten Herstellen und Lösen der elektrisch leitenden Verbindung zwischen der Versorgungsleitung 12 und dem Anschlusselement 14 vom Anschlusseinheitgehäuse 32 entfernt bzw. daran wieder angebracht werden kann.

Der Versorgungsleitung-Aufnahmebereich 40 ist in einem ersten axialen Versorgungsleitung-Aufnahmebereich-Endbereich 58 zum Anschlusselement-Aufnahmebereich 38 offen. In einem zweiten axialen Versorgungsleitung-Aufnahmebereich-Endbereich 60 bildet der Versorgungsleitung-Aufnahmebereich 40 bzw. das Anschlusseinheitgehäuse 32 eine an die Außenabmessung der Versorgungsleitung 12 angepasste Durchführung 62, so dass in diesem Bereich ein gegen das Eindringen von Spritzwasser oder Verunreinigungen im Wesentlichen abgeschlossener Anschluss des Anschlusseinheitgehäuses 32 an die Versorgungsleitung 12 realisiert ist.

In dem Anschlusselement-Aufnahmebereich 38 des Anschlusseinheitgehäuses 32 ist ein ringartig ausgebildetes erstes Isolierelement 64 beispielsweise aus Keramikmaterial angeordnet. Dieses ist am Anschlusseinheitgehäuse 32 durch zwei axial beidseits davon ausgebildete, sickenartige Einformungen 66, 68 formschlüssig gehalten, so dass auch trotz der unterschiedlichen Aufbaumaterialien für das erste Isolierelement 64 und das Anschlusseinheitgehäuse 32 eine stabile Verbindung zwischen diesen beiden Bauteilen realisiert ist. Das Leiterelement 22 des Anschlusselements 14 durchsetzt eine Anschlusselement-Aufnahmeöffnung 70 in dem ersten Isolierelement 64. Das erste Isolierelement 64 ist axial an dem Anschlusselement 14, beispielsweise dem Mantelelement 20 desselben, abgestützt. Auf den über das erste Isolierelement 64 hervorstehenden Abschnitt des Leiterelements 22 ist die Anschlussöse 28 aufgeschoben und durch das Schrauborgan 30 gegen das erste Isolierelement 64 gepresst, wodurch dieses wiederum gegen das Anschlusselement 14 bzw. allgemein die Abgasanlage 16 gepresst wird und somit die Anschlusseinheit 10 definiert bezüglich der Abgasanlage 16 gehalten ist. Wie bereits angeführt, kann in diesem Zustand der Abschlussrand 46 an der Außenumfangsfläche 48 der Abgasführungskomponente 18 anliegen oder kann zu dieser Außenumfangsfläche einen spaltartigen Abstand aufweisen.

In dem Versorgungsleitung-Aufnahmebereich 40 ist ein zweites Isolierelement 72 aufgenommen. Auch dieses ist durch Formschluss zwischen zwei sickenartigen Einformungen 74, 76 am Anschlusseinheitgehäuse 32 festgehalten und stellt eine Versorgungsleitung-Aufnahmeöffnung 78 bereit, durch welche die Versorgungsleitung 12 sich hindurch erstreckt und somit bezüglich des Anschlusseinheitgehäuses 32 in dem den Versorgungsleitung-Aufnahmebereich 40 durchsetzenden Längenbereich gehalten ist.

Durch die beiden Isolierelemente 64, 72 ist die Anschlusseinheit 10 stabil elektrisch isoliert und auch thermisch isoliert bezüglich des Anschlusselements 14 bzw. der damit elektrisch leitend verbundenen Versorgungsleitung 12 gehalten. Eine im Betrieb unvermeidbar auftretende Erwärmung des Anschlusselements 14 und über dieses auch der Versorgungsleitung 12 führt somit nicht zu einer übermäßigen Erwärmung der Anschlusseinheit 10.

Eine alternative Ausgestaltungsart ist in Fig. 2 dargestellt. In dieser entspricht der Aufbau der Anschlusseinheit 10 grundsätzlich dem vorangehend beschriebenen Aufbau, so dass auf diese Ausführungen verwiesen werden kann.

In Zuordnung zu dem Anschlusselement 14 ist ein die Gegen-Anschlussfläche 52 bereitstellender Sockel 80 vorgesehen. Dieser kann beispielsweise einen Teil des Anschlusselements 14, insbesondere des Mantelelements 20 desselben bilden und damit beispielsweise integral ausgebildet oder verbunden sein, kann alternativ aber auch an der Abgasführungskomponente 18 vorgesehen sein.

Die am Sockel 80 bereitgestellte Gegen-Anschlussfläche 52 umgibt die erste Gehäuseachse G₁ ringartig und ist zu dieser im Wesentlichen orthogonal. In Entsprechung dazu ist die am Anschlussrand 46 vorgesehene Abgasanlage-Anschlussfläche 50 ebenfalls im Wesentlichen orthogonal zur ersten Gehäuseachse G₁ ausgebildet, so dass sie, wie in Fig. 2 dargestellt, der Gegen-Anschlussfläche 52 mit geringem, spaltartigem Abstand gegenüberliegt oder sich an dieser abstützt.

Aufgrund der im Wesentlichen orthogonalen Orientierung der Abgasanlage-Anschlussfläche 50 bezüglich der ersten Gehäuseachse G₁ ist der Aufbau des Anschlusseinheitgehäuses 32 bzw. der beiden dieses im Wesentlichen bereitstellenden Gehäuseschalen 34, 36 einfach zu realisieren.

Durch die erfindungsgemäß aufgebaute Anschlusseinheit wird der Bereich, in welchem eine Versorgungsleitung an ein Anschlusselement einer Abgasanlage elektrisch angeschlossen ist, nach außen gegen Umgebungseinflüsse, insbesondere gegen Spritzwasser, abgeschirmt. Die Gefahr, dass durch Spritzwasser ein elektrischer Kurzschluss erzeugt wird, kann somit ausgeschlossen werden. Auch ist die Gefahr einer übermäßigen Korrosion in dem Bereich, in welchem die Versorgungsleitung an ein zugeordnetes Anschlusselement der Abgasanlage angeschlossen ist, weitestgehend ausgeschlossen, so dass auch nach längerer Betriebsdauer durch den bei der erfindungsgemäßen Anschlusseinheit realisierten Zugriff auf den Bereich dieser Verbindung die Möglichkeit besteht, die Versorgungsleitung vom zugeordneten Anschlusselement elektrisch bzw. mechanisch zu entkoppeln. Auch die Gefahr, dass bei Durchführung von Reinigungs- oder Wartungsarbeiten bei aktivierter Heizeinrichtung irrtümlicherweise ein Anschlusselement berührt wird oder durch ein Werkzeug ein Kurzschluss zu einem der Anschlusselemente oder zwischen den beiden Anschlusselementen einer Heizeinrichtung erzeugt wird, besteht aufgrund der durch die erfindungsgemäß aufgebaute Abschlusseinheit realisierten Ummantelung dieses Bereich der elektrischen Verbindung nicht.

Alternativ bzw. zusätzlich zum Bereitstellen der thermischen und elektrischen Isolierung vermittels der beiden Isolierelemente ist es möglich, das Anschlusseinheitgehäuse an seiner Innenseite zumindest bereichsweise mit einer elektrisch isolierenden Beschichtung, beispielsweise einer Keramikbeschichtung, zu überziehen, um einen direkten körperlichen Kontakt zwischen dem Aufbaumaterial des Anschlusseinheitgehäuses, also beispielsweise einem Blechmaterial, und der Versorgungsleitung bzw. dem Anschlusselement zu vermeiden.

Bei der erfindungsgemäßen Anschlusseinheit kann, alternativ zu der in den Figuren dargestellten, im Wesentlichen geradlinig sich erstreckenden Ausgestaltung des Anschlusselement-Aufnahmebereichs bzw. des Versorgungsleitung-Aufnahmebereichs, zumindest einer dieser beiden Aufnahmebereiche gekrümmt und sich somit entlang einer gekrümmten Längsachse erstreckend ausgebildet sein, wobei ein derartig gekrümmter Aufnahmebereich gleichermaßen die beiden vorangehend erläuterten axialen Endbereiche aufweist.

## Patentansprüche

1. Anschlusseinheit zum Anschließen einer elektrischen Versorgungsleitung (12) an ein an einer beheizbaren Abgasanlage (16) hervorstehend angeordnetes Anschlusselement (14), umfassend ein Anschlusseinheitgehäuse (32) mit einem in Richtung einer ersten Gehäuseachse (G₁) sich erstreckenden Anschlusselement-Aufnahmebereich (38) und einem in Richtung einer zweiten Gehäuseachse (G₂) sich erstreckenden Versorgungsleitung-Aufnahmebereich (40), wobei der Anschlusselement-Aufnahmebereich (38) einen ersten axialen Anschlusselement-Aufnahmebereich-Endbereich (44) und einen zweiten axialen Anschlusselement-Aufnahmebereich-Endbereich (54) aufweist, wobei der Anschlusselement-Aufnahmebereich (38) in seinem ersten axialen Anschlusselement-Aufnahmebereich-Endbereich (44) zur Aufnahme des an der Abgasanlage (16) hervorstehend getragenen Anschlusselements (14) offen ist und in seinem zweiten axialen Anschlusselement-Aufnahmebereich-Endbereich (54) abgeschlossen ist, wobei der Versorgungsleitung-Aufnahmebereich (40) in einem ersten axialen Versorgungsleitung-Aufnahmebereich-Endbereich (58) zu dem Anschlusselement-Aufnahmebereich (38) offen ist und in einem zweiten Versorgungsleitung-Aufnahmebereich-Endbereich (60) zur Aufnahme einer elektrischen Versorgungsleitung (12) offen ist, **dadurch gekennzeichnet, dass** der Anschlusselement-Aufnahmebereich (38) am zweiten axialen Anschlusselement-Aufnahmebereich-Endbereich (54) durch einen Deckel (56) abgeschlossen ist, und dass im Anschlusselement-Aufnahmebereich (38) ein das Anschlusseinheitgehäuse (32) bezüglich des in dem Anschlusselement-Aufnahmebereich (38) aufzunehmenden, an der Abgasanlage (16) hervorstehend angeordneten Anschlusselements (14) abstützendes erstes Isolierelement (64) angeordnet ist.

2. Anschlusseinheit nach Anspruch 1, **dadurch gekennzeichnet, dass** das Anschlusseinheitgehäuse (32) mit zwei in einem Verbindungsrandbereich (42) miteinander verbundenen Gehäuseschalen (34, 36) aufgebaut ist, wobei jede Gehäuseschale (34, 36) einen ersten Gehäuseschalenabschnitt (34', 36') zum Bereitstellen des Anschlusselement-Aufnahmebereichs (38) und einen zweiten Gehäuseschalenabschnitt (34", 36") zum Bereitstellen des Versorgungsleitung-Aufnahmebereichs (40) aufweist, oder/und dass das Anschlusseinheitgehäuse (32) wenigstens teilweise aus Blechmaterial aufgebaut ist.

3. Anschlusseinheit nach einem der vorangehenden Ansprüche, **dadurch gekennzeichnet, dass** das Anschlusseinheitgehäuse (32) im ersten axialen Anschlusselement-Aufnahmebereich-Endbereich (44) einen bezüglich der ersten Gehäuseachse (G₁) nach radial außen hervorstehenden Abgasanlage-Anschlussrand (46) mit einer die erste Gehäuseachse (G₁) ringartig umgebenden, einer Gegen-Anschlussfläche (52) einer Abgasanlage (16) zugewandt zu positionierenden Abgasanlage-Anschlussfläche (50) aufweist, vorzugsweise wobei die Abgasanlage-Anschlussfläche (50) in einer zur ersten Gehäuseachse (G₁) orthogonalen Ebene liegt oder die Abgasanlage-Anschlussfläche (50) gekrümmt ist, vorzugsweise um eine zur ersten Gehäuseachse (G₁) orthogonale Krümmungsachse (K).

4. Anschlusseinheit einem der vorangehenden Ansprüche, **dadurch gekennzeichnet, dass** der Deckel (56) durch Formschluss am Anschlusseinheitgehäuse (32) gehalten ist.

5. Anschlusseinheit nach einem der vorangehenden Ansprüche, **dadurch gekennzeichnet, dass** das erste Isolierelement (64) an dem Anschlusseinheitgehäuse (32) durch Formschluss gehalten ist oder/und das erste Isolierelement (64) eine Anschlusselement-Aufnahmeöffnung (70) aufweist oder/und das erste Isolierelement (64) mit Keramikmaterial aufgebaut ist.

6. Anschlusseinheit nach einem der vorangehenden Ansprüche, **dadurch gekennzeichnet, dass** in dem Versorgungsleitung-Aufnahmebereich (40) ein das Anschlusseinheitgehäuse (32) bezüglich einer in dem Versorgungsleitung-Aufnahmebereich (40) aufzunehmenden Versorgungsleitung (12) abstützendes zweites Isolierelement (72) angeordnet ist.

7. Anschlusseinheit nach Anspruch 6, **dadurch gekennzeichnet, dass** das zweite Isolierelement (72) an dem Anschlusseinheitgehäuse (32) durch Formschluss gehalten ist, oder/und dass das zweite Isolierelement (72) eine Versorgungsleitung-Aufnahmeöffnung (78) aufweist, oder/und dass das zweite Isolierelement (72) mit Keramikmaterial aufgebaut ist.

8. Anschlusseinheit nach einem der vorangehenden Ansprüche, **dadurch gekennzeichnet, dass** die zweite Gehäuseachse (G₂) im Wesentlichen orthogonal zur ersten Gehäuseachse (G₁) ist.

9. Abgasanlage für eine Brennkraftmaschine, umfassend eine Abgasführungskomponente (18), wenigstens ein an der Abgasführungskomponente (18) getragenes Anschlusselement (14) zum Anschluss einer elektrischen Versorgungsleitung (12) und in Zuordnung zu dem wenigstens einen Anschlusselement (14) eine Anschlusseinheit (10) nach einem der vorangehenden Ansprüche zum Anschließen der dem wenigstens einen Anschlusselement (14) zugeordneten elektrischen Versorgungsleitung (12) an dieses Abschlusselement (14).

10. Abgasanlage nach Anspruch 9, **dadurch gekennzeichnet, dass** das wenigstens eine Anschlusselement (14) in dem Anschlusselement-Aufnahmebereich (38) der diesem Anschlusselement (14) zugeordneten Anschlusseinheit (10) aufgenommen ist, und dass die dem wenigstens einen Anschlusselement (14) zugeordnete Versorgungsleitung (12) in dem Versorgungsleitung-Aufnahmebereich (40) der diesem Anschlusselement (14) zugeordneten Anschlusseinheit (10) derart aufgenommen ist, dass ein Anschlussende (26) dieser Versorgungsleitung (12) sich in den Anschlusselement-Aufnahmebereich (38) erstreckt und mit dem Anschlusselement (14) elektrisch leitend verbunden ist.

11. Abgasanlage nach Anspruch 10, **dadurch gekennzeichnet, dass** am Anschlussende (26) der Versorgungsleitung (12) eine auf das Anschlusselement (14) aufgeschobene und daran durch Verschraubung festgelegte Anschlussöse (28) vorgesehen ist.

12. Abgasanlage nach einem der Ansprüche 9-11, sofern auf Anspruch 5 rückbezogen, **dadurch gekennzeichnet, dass** die Anschlusseinheit (10) durch das erste Isolierelement (64) bezüglich der Abgasanlage (16), vorzugsweise bezüglich des Anschlusselements (14), abgestützt ist.

13. Abgasanlage nach Anspruch 11 und Anspruch 12, **dadurch gekennzeichnet, dass** das erste Isolierelement (64) vermittels eines die Versorgungsleitung (12) am Anschlusselement (14) festlegenden Schrauborgans (30) an der Abgasanlage (16) gehalten ist.

14. Abgasanlage nach einem der Ansprüche 9-13, sofern auf Anspruch 3 rückbezogen, **dadurch gekennzeichnet, dass** die Abgasanlage-Anschlussfläche (50) einer die Gegen-Anschlussfläche (52) bereitstellenden gekrümmten Außenumfangsfläche (48) der Abgasführungskomponente (18) gegenüberliegt.

15. Abgasanlage nach einem der Ansprüche 9-13, sofern auf Anspruch 3 rückbezogen, **dadurch gekennzeichnet, dass** die Abgasanlage-Anschlussfläche (50) der ungekrümmten Gegen-Anschlussfläche (52) am Anschlusselement (14) oder an der Abgasführungskomponente (18) gegenüberliegt.

## Claims

1. A connection unit for the connection of an electrical supply line (12) to a connection element (14) arranged protrudingly at a heatable exhaust gas system (16), comprising a connection unit housing (32) having a connection element receiving region (38) extending in the direction of a first housing axis (G₁) and a supply line receiving region (40) extending in the direction of a second housing axis (G₂), wherein the connection element receiving region (38) has a first axial connection element receiving region end region (44) and a second axial connection element receiving region end region (54), wherein the connection element receiving region (38) is open in its first axial connection element receiving region end region (44) for receiving the connection element (14) protruding from the exhaust gas system (16) and is closed off in its second axial connection element receiving region end region (54), wherein the supply line receiving region (40) is open to the connection element receiving region (38) in a first axial supply line receiving region end region (58) and is open in a second supply line receiving region end region (60) for receiving an electrical supply line (12), **characterized in that** the connection element receiving region (38) is closed off in the second axial connection element receiving region end region (54) by a cover (56), and **in that** there is arranged in the connection element receiving region (38) a first insulating element (64) which supports the connection unit housing (32) with respect to the connection element (14) that is to be received in the connection element receiving region (38) and is arranged protrudingly at the exhaust gas system (16).

2. The connection unit as claimed in claim 1, **characterized in that** the connection unit housing (32) is constructed with two housing shells (34, 36) connected together in a connection edge region (42), wherein each housing shell (34, 36) has a first housing shell portion (34', 36') for providing the connection element receiving region (38) and a second housing shell portion (34", 36") for providing the supply line receiving region (40), or/and **in that** the connection unit housing (32) is constructed at least partially from sheet-metal material.

3. The connection unit as claimed in one of the preceding claims, **characterized in that** the connection unit housing (32) has in the first axial connection element receiving region end region (44) an exhaust gas system connection edge (46) which protrudes radially outwards with respect to the first housing axis (G₁) and has an exhaust gas system connection surface (50) which surrounds the first housing axis (G₁) in an annular manner and is to be positioned facing a counter connection surface (52) of an exhaust gas system (16), preferably wherein the exhaust gas system connection surface (50) lies in a plane orthogonal to the first housing axis (G₁) or the exhaust gas system connection surface (50) is curved, preferably about an axis of curvature (K) which is orthogonal to the first housing axis (G₁).

4. The connection unit according to one of the preceding claims, **characterized in that** the cover (56) is held on the connection unit housing (32) by positive engagement.

5. The connection unit **characterized in that** the first insulating element (64) is held on the connection unit housing (32) by positive engagement, or/and **in that** the first insulating element (64) has a connection element receiving opening (70), or/and **in that** the first insulating element (64) is constructed with ceramics material.

6. The connection unit as claimed in one of the preceding claims, **characterized in that** there is arranged in the supply line receiving region (40) a second insulating element (72) which supports the connection unit housing (32) with respect to a supply line (12) that is to be received in the supply line receiving region (40).

7. The connection unit as claimed in claim 6, **characterized in that** the second insulating element (72) is held on the connection unit housing (32) by positive engagement, or/and **in that** the second insulating element (72) has a supply line receiving opening (78), or/and **in that** the second insulating element (72) is constructed with ceramics material.

8. The connection unit as claimed in one of the preceding claims, **characterized in that** the second housing axis (G₂) is substantially orthogonal to the first housing axis (G₁).

9. An exhaust gas system for a combustion engine, comprising an exhaust gas routing component (18), at least one connection element (14), carried on the exhaust gas routing component (18), for the connection of an electrical supply line (12) and, in association with the at least one connection element (14), a connection unit (10) as claimed in one of the preceding claims for the connection of the electrical supply line (12) associated with the at least one connection element (14) to that connection element (14).

10. The exhaust gas system as claimed in claim 9, **characterized in that** the at least one connection element (14) is received in the connection element receiving region (38) of the connection unit (10) associated with that connection element (14), and **in that** the supply line (12) associated with the at least one connection element (14) is received in the supply line receiving region (40) of the connection unit (10) associated with that connection element (14) in such a manner that a connection end (26) of that supply line (12) extends into the connection element receiving region (38) and is electrically conductively connected to the connection element (14).

11. The exhaust gas system as claimed in claim 10, **characterized in that** there is provided at the connection end (26) of the supply line (12) a connection eyelet (28) which is pushed onto the connection element (14) and fixed thereon by screwing.

12. The exhaust gas system as claimed in one of claims 9-11, where dependent on claim 5, **characterized in that** the connection unit (10) is supported with respect to the exhaust gas system (16), preferably with respect to the connection element (14), by the first insulating element (64).

13. The exhaust gas system as claimed in claim 11 and claim 12, **characterized in that** the first insulating element (64) is held on the exhaust gas system (16) by means of a screw member (30) which fixes the supply line (12) to the connection element (14).

14. The exhaust gas system as claimed in one of claims 9-13, where dependent on claim 3, **characterized in that** the exhaust gas system connection surface (50) is located opposite a curved outer circumferential surface (48), providing the counter connection surface (52), of the exhaust gas routing component (18).

15. The exhaust gas system as claimed in one of claims 9-13, where dependent on claim 3, **characterized in that** the exhaust gas system connection surface (50) is located opposite the non-curved counter connection surface (52) on the connection element (14) or on the exhaust gas routing component (18).

## Revendications

1. Une unité de connexion pour connecter une ligne d'alimentation électrique (12) à un élément de connexion (14) disposé de manière saillante sur un système d'échappement chauffable (16), comprenant un boîtier d'unité de connexion (32) comportant une zone de réception d'élément de connexion (38) s'étendant dans la direction d'un premier axe du boîtier (G₁) et une zone de réception de ligne d'alimentation (40) s'étendant dans la direction d'un deuxième axe du boîtier (G₂), la zone de réception d'élément de connexion (38) présentant une première zone d'extrémité de zone de réception d'élément de connexion axiale (44) et une deuxième zone d'extrémité de zone de réception d'élément de connexion axiale (54), la zone de réception d'élément de connexion (38) étant ouverte dans sa première zone d'extrémité de zone de réception d'élément de connexion axiale (44) pour recevoir l'élément de connexion (14) faisant saillie du système d'échappement (16) et étant fermée dans sa deuxième zone d'extrémité de zone de réception d'élément de connexion axiale (54), la zone de réception de ligne d'alimentation (40) étant ouverte vers la zone de réception d'élément de connexion (38) dans une première zone d'extrémité de zone de réception de ligne d'alimentation (58) et étant ouverte dans une deuxième zone d'extrémité de zone de réception de ligne d'alimentation (60) pour recevoir une ligne d'alimentation électrique (12), **caractérisé en ce que** la zone de réception d'élément de connexion (38) est fermée dans la deuxième zone d'extrémité de la zone de réception d'élément de connexion axiale (54) par un couvercle (56), et **en ce qu'**un premier élément isolant (64) est disposé dans la zone de réception d'élément de connexion (38), lequel élément isolant soutient le boîtier d'unité de connexion (32) par rapport à l'élément de connexion (14) qui doit être reçu dans la zone de réception d'élément de connexion (38) et est disposé de manière saillante au niveau du système d'échappement (16).

2. L'unité de connexion selon la revendication 1, **caractérisée en ce que** le boîtier d'unité de connexion (32) est constitué de deux coques de boîtier (34, 36) reliées entre elles dans une zone de bordure de connexion (42), dans lequel chaque coque de boîtier (34, 36) comporte une première partie de coque de boîtier (34', 36') pour former la zone de réception d'élément de connexion (38) et une deuxième partie de coque de boîtier (34", 36") pour former la zone de réception de ligne d'alimentation (40), et/ou **en ce que** le boîtier d'unité de connexion (32) est réalisé au moins en partie en tôle.

3. L'unité de connexion selon l'une des revendications précédentes, **caractérisée en ce que** le boîtier d'unité de connexion (32) comporte, dans la première zone d'extrémité de la zone de réception d'élément de connexion axiale (44), un bord de connexion du système d'échappement (46) qui dépasse radialement vers l'extérieur par rapport au premier axe du boîtier (G₁) et qui présente une surface de connexion au système d'échappement (50) qui entoure le premier axe du boîtier (G₁) de manière annulaire et qui doit être positionnée en face d'une surface de connexion opposée (52) d'un système d'échappement (16), dans lequel de préférence la surface de connexion au système d'échappement (50) se trouve dans un plan orthogonal au premier axe du boîtier (G₁) ou la surface de connexion au système d'échappement (50) est courbée, de préférence autour d'un axe de courbure (K) qui est orthogonal au premier axe du boîtier (G₁).

4. L'unité de connexion selon l'une des revendications précédentes, **caractérisée en ce que** le couvercle (56) est maintenu sur le boîtier d'unité de connexion (32) par engagement positif.

5. L'unité de connexion **caractérisée en ce que** le premier élément isolant (64) est maintenu sur le boîtier (32) de l'unité de connexion par engagement positif, et/ou **en ce que** le premier élément isolant (64) comporte une ouverture de réception d'élément de connexion (70), et/ou **en ce que** le premier élément isolant (64) est réalisé en matériau céramique.

6. L'unité de connexion selon l'une des revendications précédentes, **caractérisée en ce qu'**un deuxième élément isolant (72) est disposé dans la zone de réception de la ligne d'alimentation (40), lequel soutient le boîtier d'unité de connexion (32) par rapport à une ligne d'alimentation (12) qui doit être reçue dans la zone de réception de la ligne d'alimentation (40).

7. L'unité de connexion selon la revendication 6, **caractérisée en ce que** le deuxième élément isolant (72) est maintenu sur le boîtier d'unité de connexion (32) par engagement positif, et/ou **en ce que** le deuxième élément isolant (72) comporte une ouverture de réception de ligne d'alimentation (78), et/ou **en ce que** le deuxième élément isolant (72) est réalisé en matériau céramique.

8. L'unité de connexion selon l'une des revendications précédentes, **caractérisée en ce que** le deuxième axe du boîtier (G₂) est sensiblement orthogonal au premier axe du boîtier (G₁).

9. Un système d'échappement pour un moteur à combustion, comprenant un composant d'acheminement des gaz d'échappement (18), au moins un élément de connexion (14), porté par le composant d'acheminement des gaz d'échappement (18), pour le connexion d'une ligne d'alimentation électrique (12) et, en association avec ledit au moins un élément de connexion (14), une unité de connexion (10) selon l'une des revendications précédentes pour la connexion de la ligne d'alimentation électrique (12) associée audit au moins un élément de connexion (14) à cet élément de connexion (14).

10. Le système d'échappement selon la revendication 9, **caractérisé en ce que** ledit au moins un élément de connexion (14) est reçu dans la zone de réception d'élément de connexion (38) de l'unité de connexion (10) associée à cet élément de connexion (14), et **en ce que** la ligne d'alimentation électrique (12) associée audit au moins un élément de connexion (14) est reçue dans la zone de réception de ligne d'alimentation (40) de l'unité de connexion (10) associée à cet élément de connexion (14) de telle manière qu'une extrémité de connexion (26) de cette ligne d'alimentation électrique (12) s'étende dans la zone de réception d'élément de connexion (38) et soit reliée de manière électriquement conductrice à l'élément de connexion (14).

11. Le système d'échappement selon la revendication 10, **caractérisé en ce qu'**il est prévu, à l'extrémité de connexion (26) de la ligne d'alimentation électrique (12), un œillet de connexion (28) qui est enfilé sur l'élément de connexion (14) et fixé sur celui-ci par vissage.

12. Le système d'échappement selon l'une des revendications 9 à 11, si dépendant de la revendication 5, **caractérisé en ce que** l'unité de connexion (10) est supportée par rapport au système d'échappement (16), de préférence par rapport à l'élément de connexion (14), par le premier élément isolant (64).

13. Le système d'échappement selon la revendication 11 et la revendication 12, **caractérisé en ce que** le premier élément isolant (64) est maintenu sur le système d'échappement (16) au moyen d'un élément de vissage (30) qui fixe la ligne d'alimentation électrique (12) à l'élément de connexion (14).

14. Le système d'échappement selon l'une des revendications 9 à 13, si dépendant de la revendication 3, **caractérisé en ce que** la surface de connexion (50) du système d'échappement est située en face d'une surface circonférentielle extérieure courbée (48), formant la surface de connexion opposée (52), du composant d'acheminement des gaz d'échappement (18).

15. Le système d'échappement selon l'une des revendications 9 à 13, si dépendant de la revendication 3, **caractérisé en ce que** la surface de connexion (50) du système d'échappement est située en face de la surface de connexion opposée non courbée (52) sur l'élément de connexion (14) ou sur le composant d'acheminement des gaz d'échappement (18).
